# DEMANDE DE BREVET EUROPEEN

(11) **EP 3 401 293 A1**
(43) Date de publication de la demande: **14.11.2018**
(21) Numéro de dépôt: 18171455.1
(22) Date de dépôt: 09.05.2018
(51) Int. Cl.: C04B 35/52, C04B 35/622, C04B 35/80, C04B 38/00, H01M 10/0525

(54) **PROCÉDÉ DE FABRICATION D'UN COMPOSITE CONSTITUÉ D'UN MONOLITHE DE GRAPHÈNE ET DE SILICIUM**

(30) Priorité: 10.05.2017 EP 17305530
(71) Demandeur: Commissariat à l'Énergie Atomique et aux Énergies Alternatives, 75015 Paris (FR)
(72) Inventeur: GENTILE, Pascal, 38500 Voiron (FR); BANDA, Harish, 38000 Grenoble (FR); DUCLAIROIR, Florence, 38500 Coublevie (FR)
(74) Mandataire: Icosa

(57) **Abrégé**

La présente invention concerne le domaine des matériaux conducteurs.

En particulier, la présente invention concerne le procédé de fabrication d'un composite oxyde de graphène réduit chimiquement / nanofils de silicium caractérisé en ce que la formation du monolithe tridimensionnel et la réduction chimique de l'oxyde de graphène par un réducteur choisi parmi l'hydrate d'hydrazine, l'éthylène diamine et le 1,4-diaminebutane se font en une seule étape.

La présente invention concerne également le composite oxyde de graphène réduit chimiquement / nanofils de silicium susceptible d'être obtenu par ce procédé de fabrication. Le composite est caractérisé en ce qu'il s'agit d'un monolithe tridimensionnel dans lequel les deux composants sont liés entre eux par un lien, présentant un haut degré de réduction avec un rapport C/O de 1 à 50, de préférence de 10 à 25, plus préférentiellement de 16,7, présentant une structure poreuse et une surface spécifique élevée de 50 à 5000, de préférence 800 à 2500, très préférentiellement 1 433 m²/g et présentant une faible résistance au transfert de charge de 0,1 à 5 Ω, de préférence 0,3 à 1,5 Ω, très préférentiellement 0,62 Ω.

La présente invention concerne enfin une batterie lithium-ion ou une supercapacité comprenant ledit composite (ou monolithe).

## Description

### DOMAINE DE L'INVENTION

La présente invention concerne la préparation d'hydrogels de graphène à haute conductivité électrique, particulièrement adaptés pour les applications de stockage de l'énergie comme des batteries lithium-ion ou des supercapacités.

Le domaine technique auquel se rapporte cette invention est celui de la préparation du graphène et de ses dérivés par exfoliation chimique et fonctionnalisation de sa surface. Plus précisément, l'invention s'intéresse à la modification de l'interface graphène / solvant aqueux, par réduction et/ou greffage de molécules, permettant la formation de macrostructures de graphène décrites dans la littérature comme étant des hydrogels de graphène ou des mousses ou des monolithes ou des structures tridimensionnelles de graphène.

L'invention concerne plus particulièrement le procédé de fabrication d'un composite graphène / nanofils de silicium, qui est un monolithe poreux, fortement réduit, dans lequel les nanofils de silicium sont distribués de façon homogène dans le monolithe et dans lequel les deux composants sont intimement liés.

### ÉTAT DE LA TECHNIQUE

L'augmentation des prix du pétrole et le souci accru de trouver des solutions énergétiques non polluantes ont poussé les chercheurs à s'intéresser à des systèmes d'énergie électrochimique plus propres et plus performants. Parmi ces systèmes, les batteries lithium-ion associent des exigences d'énergie et de puissance élevées, ne présentent aucun effet mémoire, ont une faible autodécharge et ne nécessitent pas de maintenance. Ces batteries apparaissent donc particulièrement adaptées pour les véhicules hybrides et les véhicules électriques.

Les anodes à base de silicium améliorent considérablement la capacité de stockage d'énergie des batteries lithium-ion par rapport aux anodes en graphite du fait de leur haute densité d'énergie. Cependant, l'insertion des ions lithium dans le silicium s'accompagne d'importantes variations de volume de l'anode au moment de la charge ou de la décharge. L'utilisation d'électrodes en silicium oblige donc à prévoir de l'espace vide dans les batteries, ce qui réduit la densité énergétique et représente un inconvénient car une haute densité énergétique est souhaitée, particulièrement pour les applications compactes. De plus, ces variations de volume fracturent le silicium et explique une faible durée de vie des batteries interdisant ainsi toute commercialisation.

Dans le but d'améliorer encore les performances et la stabilité de l'anode, des feuilles de graphène ont été utilisées en remplacement du carbone. Le graphène avec sa structure froissée dispose d'une grande flexibilité mécanique et s'adapte aux variations de volume du silicium. De plus, le graphène, avec sa conductivité électrique élevée, facilite les réactions de transfert de charge. Enfin, le graphène présente une grande surface de contact avec le silicium.

Le graphène avec sa conductivité électrique élevée, sa flexibilité mécanique et sa surface théorique remarquable permet également d'élaborer des supercapacités haute puissance promettant une large gamme d'applications dans les véhicules électriques, les dispositifs de sauvegarde et les grands équipements industriels.

Ruoff et al., ont été les pionniers de la synthèse de graphènes chimiquement modifiés. Cette synthèse est basée sur l'oxydation d'une poudre de graphite en oxyde de graphène exfolié qui est ensuite réduit. Cependant l'exposition limitée des feuilles de graphène à l'électrolyte, aqueuse ou organique, confère des capacités spécifiques faibles de 130 et 99 F/g, respectivement. Cette faible surface d'exposition s'explique par la réaggrégation des feuilles de graphène hydrophobes en raison d'interactions π-π fortes.

Plus tard, Shi et al., ont développé des hydrogels de graphène auto-assemblés à partir de solutions aqueuses d'oxyde de graphène. Deux méthodes d'assemblage en monolithe existent qui sont le traitement hydrothermal d'une solution d'oxyde de graphène et le pontage de feuilles d'oxyde de graphène par réaction avec la diamine.

Ces monolithes de l'art antérieur ne comprennent pas de silicium qui améliore la capacité de stockage d'énergie.

Le brevet chinois CN106531992 décrit des matériaux composites utilisés pour réaliser des électrodes de batterie et contenant des particules de silicium, de l'acide phytique, un oxyde de graphène multicouche et des nanotubes de carbone. Le graphène se trouve ici sous sa forme oxydée.

Les composites graphène réduit / nanofils de silicium existent mais consistent généralement soit en des dépôts de graphène réduit à l'extrémité de nanofils de silicium ayant été obtenus par gravure électrochimique, soit en des mélanges mécaniques entre des nanofils, obtenus par gravure électrochimique puis clivés de leur substrat de croissance, et du graphène réduit.

Pour améliorer la pénétration du graphène par les nanofils de silicium, Ren et al., Nanoscale, 2014, 6, 3353-3360 utilise une solution d'oxyde de graphène et d'HAuCl₄ en présence d'un réducteur, l'éthylène glycol, qui est ensuite placée dans un autoclave à 220°C pendant quelques heures. On obtient ainsi une poudre de graphène décorée par des nanoparticules d'or et non un monolithe.

Binh Phuong Nhan Nguyen et al., Advanced Energy Materials, 2013, décrit l'ajout d'hydrate d'hydrazine à une solution d'oxyde de graphène. La solution est chauffée dans un bain d'huile à 100°C sous un condenseur refroidi à l'eau pendant 24 heures. L'oxyde de graphène réduit précipite progressivement en un solide noir. Ce solide présente une structure semblable une poudre d'oxyde de graphène réduit.

Le brevet américain US2016/0043384 décrit un procédé d'obtention d'une anode de batterie lithium-ion dans laquelle des nanofils de silicium sont intégrés dans les pores d'une mousse de graphène réduite. Ce procédé consiste en la préparation d'une solution contenant des nanofils de silicium et des particules de graphène réduit hydro-thermiquement ou thermiquement. Cette dispersion est déposée sur un substrat pour former une mixture anodique sous forme de couche humide. Cette mixture est séchée puis chauffée à haute température. Le traitement thermique permet l'élimination des éléments non carbonés du graphène et donc, de manière concomitante, la création de pores dans la mixture. Cependant, ce procédé basé sur un mélange silicium - graphène n'assure pas une interpénétration optimale des nanofils de silicium dans la mousse de graphène.

La Demanderesse a effectué de longues recherches sur les graphènes, et a défini qu'il existait un besoin de structures de graphènes tridimensionnelles, qui permettraient une meilleure percolation des charges ainsi qu'un transfert rapide des ions et qui pourraient conduire à une distribution homogène et robuste de particules ou de nanofils, notamment de silicium. En particulier, les recherches de la Demanderesse l'ont conduit à estimer qu'il existait un besoin de structures de graphènes tridimensionnelles poreuses dans lesquelles des nanofils de silicium pourraient, tout à la fois, être distribués de manière homogène, être greffés solidement c'est-à-dire avec un lien physicochimique avec la mousse de graphène, et être protégés par la structure de graphène.

### RÉSUMÉ

Ainsi, la présente invention concerne un procédé de fabrication d'un matériau tridimensionnel comprenant un monolithe d'oxyde de graphène réduit chimiquement dans lequel sont dispersés des nanofils de silicium et des nanoparticules d'or, ledit procédé étant caractérisé en ce qu'il comprend :
- une étape (1) de préparation d'un monolithe d'oxyde de graphène réduit chimiquement dans lequel sont dispersés des nanoparticules d'or ; et
- une étape (2) de fonctionnalisation dudit monolithe obtenu à l'étape (1), dans laquelle du silicium, de préférence sous forme de nanofils, est greffé à la surface dudit monolithe, et pour laquelle ledit monolithe est porté à une température de 500 à 850°C, de préférence 600 à 800°C, très préférentiellement environ 650°C en présence d'un gaz silicié.

Selon un mode de réalisation, le procédé de l'invention est caractérisé en ce que l'on prépare le monolithe d'oxyde de graphène réduit chimiquement dans lequel sont dispersées des nanoparticules d'or (étape 1), par la mise en contact dans une solution aqueuse d'oxyde de graphène, d'HAuCl₄ et d'un réducteur choisi parmi l'hydrate d'hydrazine, l'éthylène diamine et le 1,4-diaminebutane, lors d'une réaction en une étape.

Selon un mode de réalisation, le procédé de l'invention est caractérisé en ce que la fonctionnalisation du monolithe d'oxyde de graphène réduit chimiquement dans lequel sont dispersées des nanoparticules d'or (étape 2) est réalisée par chauffage dudit monolithe dans un four LPCVD en présence : d'un gaz réactif silicié, de préférence, SiH₄ ; d'un gaz additionnel, de préférence un gaz acide, plus préférentiellement HCl ; et d'un gaz porteur, de préférence l'hydrogène H₂ ; à haute pression, de préférence 500 à 1 400 Pa, plus préférentiellement 650 à 940 Pa, plus préférentiellement 800 Pa environ.

La présente invention concerne également un procédé de préparation d'un monolithe d'oxyde de graphène réduit chimiquement, par la mise en contact d'une solution aqueuse d'oxyde de graphène et d'un réducteur choisi parmi l'hydrate d'hydrazine, l'éthylène diamine et le 1,4-diaminebutane, lors d'une réaction en une étape.

La présente invention concerne également un monolithe d'oxyde de graphène réduit chimiquement, susceptible d'être obtenu par le procédé de l'invention.

Selon un mode de réalisation, le monolithe de l'invention est caractérisé en ce que :
- il présente un haut degré de réduction avec un rapport C/O de 1 à 50, de préférence 10 à 25, plus préférentiellement environ 16,7 ;
- il est poreux avec une surface spécifique de 50 à 5 000 m²/g, de préférence 800 à 2500, très préférentiellement environ 1 433 m²/g ; et
- il présente une faible résistance au transfert de charge de 0,1 à 5 Ω, de préférence 0,3 à 1,5 Ω, très préférentiellement environ 0,62 Ω.

Selon un mode de réalisation, les pores du monolithe de l'invention ont un diamètre de 1 nanomètre environ à 500 micromètres.

Selon un mode de réalisation, la conductivité électrique du monolithe de l'invention est de 10 à 2500, de préférence 950 à 1500, très préférentiellement de 1141 S/m.

Selon un mode de réalisation, la capacité de décharge gravimétrique du monolithe de l'invention est comprise de 1 à 300 F/g, de préférence de 10 à 150 F/g, plus préférentiellement d'environ 130 F/g.

La présente invention concerne également une batterie lithium-ion comprenant un monolithe de l'invention.

La présente invention concerne également une supercapacité comprenant un monolithe de l'invention.

Selon un mode de réalisation, la rétention de capacité de la batterie lithium-ion ou de la supercapacité de l'invention est comprise de 80% à 99%, de préférence de 90% à 99%.

Selon un mode de réalisation, la capacité de décharge volumétrique de la batterie lithium-ion ou de la supercapacité de l'invention est comprise de 100 à 500 F/cm³, de préférence est d'environ 200 F/cm³.

Selon un mode de réalisation, la densité de puissance de la batterie lithium-ion ou de la supercapacité de l'invention est comprise de 1 à 100 kW/kg, de préférence de 10 à 50 kW/kg, plus préférentiellement d'environ 38 kW/kg.

### DÉFINITIONS

Dans la présente invention, les termes ci-dessous sont définis de la manière suivante :
- « **CVD** » signifie « Chemical Vapor Déposition » soit dépôt chimique en phase vapeur.
- « **environ** » placé devant ou après un nombre, signifie plus ou moins 10% de la valeur nominale de ce nombre.
- « **exfoliation** » est le détachement d'une ou plusieurs couches minces (« feuilles ») en surface d'un solide.
- « **feuille** » désigne une structure bidimensionnelle ayant une épaisseur inférieure à 100 nm. Les graphènes multicouches comportant jusqu'à 300 couches sont considérés comme des feuilles.
- « **fonctionnalisation** » désigne toute modification chimique de tout ou partie d'un matériau. Selon un mode de réalisation, le terme « fonctionnalisation » désigne la modification chimique de tout ou partie du composite (ou monolithe) de l'invention.

Selon un mode de réalisation, le terme « fonctionnalisation » désigne le greffage par un lien covalent d'un composé chimique (tel que par exemple des nanofils de silicium) sur tout ou partie du composite (ou monolithe) de l'invention. Selon un mode de réalisation, le terme « fonctionnalisation » peut désigner à la fois, la croissance de nanofils de silicium et leur greffage par l'établissement d'un lien covalent sur la surface du monolithe de l'invention ; le terme « surface » désignant dans la présente invention la surface externe et/ou la surface des pores dudit monolithe.
- « **four LPCVD** » désigne un four « Low Pressure Chemical Vapor Déposition » soit un four de dépôt chimique en phase vapeur basse pression.
- « **gâteau** » désigne l'agrégation de particules en un bloc friable obtenu après filtration d'une suspension.
- « **homogène** » signifie que la densité de nanofils ou de nanoparticules dans le monolithe varie peu d'une zone à une autre du monolithe.
- « **intimement liés physicochimiquement** » ou « **greffés solidement** » se réfère à deux composés liés entre eux par un lien chimique covalent.
- « **macropores** » désigne des pores de diamètres supérieurs à 50 nm. Selon un mode de réalisation, les mésopores ont un diamètre compris de plus de 50 nm à 500 000 nm (soit 500 µm) ; de préférence de plus de 50 nm à 400 000 nm, de plus de 50 nm à 300 000 nm, de plus de 50 nm à 200 000 nm, de plus de 50 nm à 100 000 nm, de plus de 50 nm à 50 000 nm, de plus de 50 nm à 40 000 nm, de plus de 50 nm à 30 000 nm, de plus de 50 nm à 20 000 nm, de plus de 50 nm à 10 000 nm, de plus de 50 nm à 5 000 nm, de plus de 50 nm à 1 000 nm, de plus de 50 nm à 500 nm, de plus de 50 nm à 400 nm, de plus de 50 nm à 300 nm, de plus de 50 nm à 200 nm, de plus de 50 nm à 100 nm, de plus de 50 nm à 90 nm, de plus de 50 nm à 80 nm, de plus de 50 nm à 70 nm, ou de plus de 50 nm à 60 nm. Selon un mode de réalisation, les mésopores ont un diamètre compris de plus de 50 nm à 500 000 nm (soit 500 µm) ; de préférence de 100 nm à 500 000 nm, de 200 nm à 500 000 nm, de 300 nm à 500 000 nm, de 400 nm à 500 000 nm, de 500 nm à 500 000 nm, de 600 nm à 500 000 nm, de 700 nm à 500 000 nm, de 800 nm à 500 000 nm, de 900 nm à 500 000 nm, de 1000 nm à 500 000 nm, de 5 000 nm à 500 000 nm, de 10 000 nm à 500 000 nm, de 15 000 nm à 500 000 nm, de 20 000 nm à 500 000 nm, de 30 000 nm à 500 000 nm, de 40 000 nm à 500 000 nm, de 50 000 nm à 500 000 nm, de 100 000 nm à 500 000 nm, de 200 000 nm à 500 000 nm, de 300 000 nm à 500 000 nm, ou de 400 000 nm à 500 000 nm.
- « **mésopores** » désigne des pores de diamètres compris entre 5 et 50 nm. Selon un mode de réalisation, les mésopores ont un diamètre compris de plus de 5 nm à 50 nm ; de préférence de 10 nm à 50 nm, de 15 nm à 50 nm, de 20 nm à 50 nm, de 25 nm à 50 nm, de 30 nm à 50 nm, de 35 nm à 50 nm, de 40 nm à 50 nm, ou de 45 nm à 50 nm ; de préférence de plus de 5 nm à 45 nm, de plus de 5 nm à 40 nm, de plus de 5 nm à 35 nm, de plus de 5 nm à 30 nm, de plus de 5 nm à 25 nm, de plus de 5 nm à 20 nm, de plus de 5 nm à 15 nm, ou de plus de 5 nm à 10 nm. Selon un mode de réalisation, les mésopores ont un diamètre d'environ 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 ou 50 nm.
- « **micropores** » désigne des pores de diamètres inférieurs à 5 nm. Selon un mode de réalisation, les micropores ont un diamètre compris de plus de 0 nm à 5 nm ; de préférence de 1 nm à 5 nm ; de préférence environ 1, 2, 3, 4 ou 5 nm.
- « **monolithe** » concerne une structure tridimensionnelle. En particulier, un monolithe (encore appelé hydrogel ou mousse) n'est pas une poudre, une feuille ou un feuillet, une mixture, un gâteau ou une pâte visqueuse. Selon un mode de réalisation, le terme « monolithe » désigne une structure tridimensionnelle poreuse, de préférence une structure tridimensionnelle poreuse d'oxyde de graphène ou de graphène. Selon un mode de réalisation, le terme « monolithe » ne désigne pas de structures multi composantes lamellaires de type « sandwich ».
- « **percolation** » désigne communément le passage d'un fluide, liquide ou gaz, à travers un milieu plus ou moins perméable.
- « **réticulation** » correspond à la formation d'un ou de plusieurs réseaux tridimensionnels.

### DESCRIPTION

### Monolithe de l'invention

Ainsi, un objet de l'invention est un graphène ou de ses dérivés, susceptible d'être obtenu par le procédé de l'invention sous forme d'un monolithe poreux.

Selon un mode de réalisation, un objet de l'invention est un graphène susceptible d'être obtenu par le procédé de l'invention sous forme d'un monolithe poreux, à porosité importante, peu dense, qu'on a le choix de densifier ou non suivant l'application. Selon un mode de réalisation, le composite (ou monolithe) de l'invention comprend des pores qui sont des micropores, des mésopores ou des macropores. Selon un mode de réalisation, un objet de l'invention est un monolithe d'oxyde de graphène, de préférence réduit chimiquement. Selon un mode de réalisation, le monolithe d'oxyde de graphène, de préférence réduit chimiquement, est susceptible d'être obtenu par le procédé de l'invention.

Un autre objet de l'invention est un composite graphène / nanoparticules d'or susceptible d'être obtenu par le procédé de l'invention sous forme d'un monolithe poreux, dans lequel les nanoparticules d'or sont distribuées de façon homogène dans le monolithe. Selon un mode de réalisation, le composite (ou le monolithe) de l'invention comprend ou est constitué de graphène et de nanoparticules d'or.

Selon un mode de réalisation, le composite (ou le monolithe) de l'invention est un composite à porosité importante, peu dense, qu'on a le choix de densifier ou non suivant l'application.

Selon un mode de réalisation, un autre objet de l'invention est un composite (ou monolithe) graphène/nanofils de silicium susceptible d'être obtenu par le procédé de l'invention qui est un monolithe poreux, dans lequel les nanofils de silicium sont distribués de façon homogène dans le monolithe et dans lequel les deux composants sont intimement liés, c'est-à-dire avec un lien physicochimique. Selon un mode de réalisation, le composite (ou le monolithe) de l'invention comprend ou est constitué de graphène et de nanofils de silicium. Selon un mode de réalisation, le composite (ou le monolithe) de l'invention comprend ou est constitué de graphène et de nanofils de silicium, lesdits nanofils de silicium étant greffés sur le graphène. Selon un mode de réalisation, le greffage s'entend d'un lien chimique, de préférence par un lien covalent. Selon un mode de réalisation, dans le composite (ou monolithe) de l'invention, le graphène et les nanofils de silicium sont liés par des interactions physiques. Selon un mode de réalisation, dans le composite (ou le monolithe) de l'invention, les nanofils de silicium sont répartis de manière homogène dans l'ensemble du matériau, de préférence sur l'ensemble de la surface des pores.

Selon un mode de réalisation, le monolithe de l'invention est sous forme sphérique, cubique ou d'un pavé droit.

Selon un mode de réalisation, le monolithe de l'invention comprend en outre des additifs.

Selon un mode de réalisation, le monolithe de l'invention a une densité de plus de 0 à 10 g/cm³, de préférence de 0,5 à 5 g/cm³, plus préférentiellement de 0,56 à 1,56 g/cm³. Selon un mode de réalisation, le monolithe de l'invention a une densité d'environ 0,1 ; 0,2 ; 0,3 ; 0,4 ; 0,5 ; 0,6 ; 0,7 ; 0,8 ; 0,9 ; 1 ; 1,1 ; 1,2 ; 1,3 ; 1,4 ; 1,5 ; 1,6 ; 1,7 ; 1,8 ; 1,9 ou 2 g/cm³. Selon un mode de réalisation, le monolithe de l'invention a une densité de plus de 0 à 10 g/cm³, de préférence de 0,5 à 5 g/cm³, plus préférentiellement de 0,56 à 1,56 g/cm³ dans des conditions ambiantes.

Selon un mode de réalisation, le monolithe de l'invention a une densité de courant de plus de 0 à 10 A/g, de préférence de 1 à 5 A/g, plus préférentiellement d'environ 2 A/g. Selon un mode de réalisation, le monolithe de l'invention a une densité de courant d'environ 1, 2, 3, 4, 5, 6, 7, 8, 9 ou 10 A/g. Selon un mode de réalisation, le monolithe de l'invention a une densité de courant de 1 à 10 A/g, de préférence de 1 à 9 A/g, de 1 à 8 A/g, de 1 à 7 A/g, de 1 à 6 A/g, de 1 à 5 A/g, de 1 à 4 A/g, de 1 à 3 A/g, ou de 1 à 2 A/g.

Selon un mode de réalisation, le monolithe de l'invention a une capacité de décharge gravimétrique comprise de 1 à 300 F/g, de préférence de 10 à 150 F/g, plus préférentiellement d'environ 130 F/g. Selon un mode de réalisation, le monolithe de l'invention a une capacité de décharge gravimétrique d'environ 10, 20, 30, 40, 50, 60, 70, 80, 90, 100, 110, 120, 130, 140, 150, 160, 170, 180, 190, 200, 210, 220, 230, 240, 250, 260, 270, 280, 290 ou 300 F/g.

Selon un mode de réalisation, le monolithe de l'invention a une capacité de décharge volumétrique comprise de 1 à 500 F/cm³, de préférence de 100 à 500 F/cm³, plus préférentiellement d'environ 200 F/cm³. Selon un mode de réalisation, le monolithe de l'invention a une capacité de décharge volumétrique d'environ 1, 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490 ou 500 F/cm³. Selon un mode de réalisation, le monolithe de l'invention a une capacité de décharge volumétrique comprise de 1 à 500 F/cm³, de préférence de 100 à 500 F/cm³, plus préférentiellement d'environ 200 F/cm³, à une densité de courant de 2A/g.

### Procédé de l'invention

L'invention concerne aussi un procédé de fabrication d'un monolithe de graphène ou de ses dérivés, de préférence d'un monolithe d'oxyde de graphène, plus préférentiellement d'un monolithe comprenant une structure d'oxyde de graphène réduit chimiquement.

Selon un mode de réalisation, l'invention concerne un procédé de fabrication d'un monolithe de graphène ou de ses dérivés, tel que défini précédemment.

Selon un mode de réalisation, le procédé de l'invention comprend :
- une étape (1) de préparation d'un monolithe de graphène ou de ses dérivés, tel que décrit précédemment ; et
- une étape (2) de fonctionnalisation dudit monolithe obtenu à l'étape (1).

Selon un mode de réalisation, le procédé de l'invention ne comprend pas d'étape de réduction du monolithe tel que décrit précédemment, par solvothermie.

### Etape (1)

Selon un mode de réalisation, le procédé de l'invention comprend une première étape comprenant ou consistant à préparer une solution d'oxyde de graphène (GO), de préférence une solution aqueuse d'oxyde de graphène.

Selon un mode de réalisation, l'invention porte sur un procédé de préparation d'un monolithe d'oxyde de graphène réduit chimiquement, par la mise en contact d'une solution aqueuse d'oxyde de graphène et d'un réducteur choisi parmi l'hydrate d'hydrazine, l'éthylène diamine et le 1,4-diaminebutane, lors d'une réaction en une étape.

Selon un mode de réalisation, on entend par l'expression « **réaction en une seule étape** », une réaction chimique permettant à la fois la formation et la réduction chimique du monolithe d'oxyde de graphène, de préférence à partir d'une solution d'oxyde de graphène telle que décrite ci-dessous.

Selon un mode de réalisation, la préparation de la solution d'oxyde de graphène est réalisée à une température allant de 5°C à 50°C, de préférence de 10°C à 40°C, plus préférentiellement à une température d'environ 20°C.

Selon un mode de réalisation, la concentration en oxyde de graphène (GO) dans la solution aqueuse est comprise de 1 mg/mL à 100 mg/mL ; de préférence de 2 mg/mL à 50 mg/mL, plus préférentiellement de 2,5 mg/mL à 10 mg/mL. Selon un mode de réalisation, la concentration en oxyde de graphène (GO) dans la solution aqueuse est de préférence comprise de 1 mg/mL à 90 mg/mL, de 1 mg/mL à 80 mg/mL, de 1 mg/mL à 70 mg/mL, de 1 mg/mL à 60 mg/mL, de 1 mg/mL à 50 mg/mL, de 1 mg/mL à 40 mg/mL, de 1 mg/mL à 30 mg/mL, de 1 mg/mL à 20 mg/mL, de 1 mg/mL à 10 mg/mL, ou de 1 mg/mL à 5 mg/mL. Selon un mode de réalisation, la concentration en oxyde de graphène (GO) dans la solution aqueuse est environ égale à 1, 2, 3, 4, 5, 6, 7, 8, 9 ou 10 mg/mL. Dans un mode de réalisation, la solution aqueuse d'oxyde de graphène est dans une gamme de 2,5 à 10 mg/mL, avantageusement 5 mg/mL.

Selon un mode de réalisation, l'étape (1) comprend en outre l'ajout de nanoparticules métalliques, de préférence des nanoparticules d'or, dans la solution d'oxyde de graphène telle que décrite précédemment. Selon un mode de réalisation, l'étape (1) comprend en outre l'ajout d'un précurseur de nanoparticules métalliques, de préférence des nanoparticules d'or, dans la solution d'oxyde de graphène telle que décrite précédemment. Selon un mode de réalisation, l'étape (1) comprend l'ajout d'acide chloraurique de formule HAuCl₄. Selon un mode de réalisation, la masse d'acide chloraurique introduite dans la solution d'oxyde de graphène telle que décrite précédemment, varie selon le taux de chargement en nanoparticules d'or ciblé dans le monolithe final. Selon un mode de réalisation, la masse d'acide chloraurique introduite dans la solution d'oxyde de graphène telle que décrite précédemment, est comprise de 1 mg à 100 mg, de préférence de 3 mg à 50 mg, plus préférentiellement est d'environ 3 mg ou 30 mg. Selon un mode de réalisation, la masse d'acide chloraurique introduite dans la solution d'oxyde de graphène telle que décrite précédemment, est de préférence comprise de 1 mg à 90 mg, de 1 mg à 80 mg, de 1 mg à 70 mg, de 1 mg à 60 mg, de 1 mg à 50 mg, de 1 mg à 40 mg, de 1 mg à 30 mg, de 1 mg à 20 mg, ou de 1 mg à 10 mg. Selon un mode de réalisation, la masse d'acide chloraurique introduite dans la solution d'oxyde de graphène telle que décrite précédemment, est environ égale à 1, 2, 3, 4, 5, 6, 7, 8, 9, 10, 11, 12, 13, 14, 15, 16, 17, 18, 19, 20, 21, 22, 23, 24, 25, 26, 27, 28,29, 30, 31, 32, 33, 34, 35, 36, 37, 38, 39, 40, 41, 42, 43, 44, 45, 46, 47, 48, 49 ou 50 mg.

Selon un mode de réalisation, l'étape (1) ne comprend pas l'ajout de nanoparticules métalliques ou de ses précurseurs. Selon un mode de réalisation, l'étape (1) ne comprend pas l'ajout de nanoparticules d'or ou de ses précurseurs.

Dans un mode de réalisation, la masse d'HAuCl₄ est dans une gamme de 0 à 100 mg, préférentiellement de 0 à 50 mg. Dans un mode de réalisation, on peut faire varier cette masse pour contrôler la masse de nanoparticules d'or et donc, in fine, la masse de nanofils de silicium puisque les nanoparticules d'or sont les catalyseurs de la formation des nanofils de silicium.

Selon un mode de réalisation, l'étape (1) comprend en outre l'emploi d'un réducteur, de préférence d'un réducteur chimique. Selon un mode de réalisation, le procédé de fabrication du monolithe de graphène selon l'invention comprend une première étape dans laquelle une solution aqueuse d'oxyde de graphène est préparée en présence d'un réducteur, de préférence choisi parmi l'hydrate d'hydrazine, l'éthylène diamine ou le 1,4-diaminebutane. Selon un mode de réalisation, le réducteur est choisi parmi l'éthylène diamine ou le 1,4-diaminebutane. Selon un mode de réalisation, le réducteur n'est pas l'hydrazine ou l'un de ses dérivés. Selon un mode de réalisation, l'étape (1) ne comprend pas d'étape de réduction thermique, par hydrothermie et/ou par solvothermie.

Selon un mode de réalisation, l'invention concerne aussi un procédé de fabrication du composite graphène / nanoparticules d'or, qui comprend une première étape dans laquelle on prépare une solution aqueuse d'oxyde de graphène, d'HAuCl₄ et d'un réducteur, de préférence choisi parmi l'hydrate d'hydrazine, l'éthylène diamine ou le 1,4-diaminebutane.

Selon un mode de réalisation, la concentration en réducteur dans la solution d'oxyde de graphène, est comprise de 3,6 µL/mg d'oxyde de graphène à 100 µL/ mg d'oxyde de graphène ; de préférence de 3,6 à 90 µL/mg d'oxyde de graphène, de 3,6 à 80 µL/mg d'oxyde de graphène, de 3,6 à 70 µL/mg d'oxyde de graphène, de 3,6 à 60 µL/mg d'oxyde de graphène, de 3,6 à 50 µL/mg d'oxyde de graphène, de 3,6 à 40 µL/mg d'oxyde de graphène, de 3,6 à 30 µL/mg d'oxyde de graphène, de 3,6 à 20 µL/mg d'oxyde de graphène, ou de 3,6 à 10 µL/mg d'oxyde de graphène. Dans un mode de réalisation, l'hydrate d'hydrazine est dans une gamme comprise entre 3,6 µL/mg d'oxyde de graphène et 7,2 µL/mg d'oxyde de graphène. Dans un mode de réalisation, l'éthylène diamine est dans une gamme comprise entre 5 µL/mg d'oxyde de graphène et 10 µL/mg d'oxyde de graphène. Dans un mode de réalisation, le 1,4-diaminebutane est dans une gamme comprise entre 5 µL/mg d'oxyde de graphène et 20 µL/mg d'oxyde de graphène.

Dans un mode de réalisation, la concentration d'oxyde de graphène est supérieure à 2,5 mg/mL et la concentration d'hydrate d'hydrazine est supérieure à 3,6 µL/mg. Pour des concentrations inférieures aucun monolithe ne se forme et le mélange reste sous forme de dispersion. Selon un mode de réalisation, la concentration minimale en oxyde de graphène est de 2,5 mg/mL. Selon un mode de réalisation, la concentration minimale en réducteur est de 3,6 µL/mg d'oxyde de graphène.

Selon un mode de réalisation, l'étape (1) comprend en outre une étape de mélange (tel que par sonification par exemple), de chauffage, de lavage, de lyophilisation et/ou de séchage de la solution d'oxyde de graphène telle que définie précédemment. Selon un mode de réalisation, l'étape (1) comprend la sonication de la solution, un chauffage, un lavage, une lyophilisation et un séchage. Selon un mode de réalisation, la formation du composite tridimensionnel (ou monolithe) et la réduction de l'oxyde de graphène sont concomitantes. Selon un mode de réalisation, la lyophilisation conduit à la formation d'un hydrogel tel que par exemple un hydrogel d'oxyde de graphène réduit par de l'hydrate d'hydrazine (GH-HD), un hydrogel d'oxyde de graphène réduit par de l'hydrate de l'éthylène diamine (GH-ED), ou un hydrogel d'oxyde de graphène réduit par le 1,4-diamine butane (GH-DB).

Selon un mode de réalisation, le mélange de la solution aqueuse d'oxyde de graphène telle que décrite précédemment, est mis en oeuvre de 1 mn à 60 min, de préférence de 5 min à 30 min, plus préférentiellement environ 10 min. Selon un mode de réalisation, le mélange de la solution aqueuse d'oxyde de graphène telle que décrite précédemment, est mis en oeuvre environ 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46,47,48, 49, 50, 51, 52, 53, 54, 55, 56, 57, 58, 59 ou 60 mn. Dans un mode de réalisation, la sonication des réactifs avant chauffage dure 10 min environ.

Selon un mode de réalisation, la solution aqueuse d'oxyde de graphène telle que décrite précédemment, est chauffée à une température de 30°C à 90°C; de préférence de 30°C à 80°C, de 30°C à 70°C, de 30°C à 60°C, de 30°C à 50°C, ou de 30°C à 40°C. Selon un mode de réalisation, la solution aqueuse d'oxyde de graphène telle que décrite précédemment, est chauffée à une température environ égale à 30, 35, 40, 45, 50, 55, 60, 65, 70, 75, 80, 85 ou 90°C.

Selon un mode de réalisation, la solution aqueuse d'oxyde de graphène telle que décrite précédemment, est chauffée pendant une durée de 1h à 48h, de préférence 1h à 24h, plus préférentiellement environ 24h. Selon un mode de réalisation, la solution aqueuse d'oxyde de graphène telle que décrite précédemment, est chauffée pendant une durée d'environ 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47 ou 48h. Dans un mode de réalisation, le chauffage de la solution est réalisé dans un flacon fermé placé dans un bain d'huile, à 80°C environ, pendant 24 heures environ, sans agitation.

Selon un mode de réalisation, la solution aqueuse d'oxyde de graphène telle que décrite précédemment, est lavée. Dans un mode de réalisation, le lavage consiste en des immersions successives dans de l'eau distillée.

Selon un mode de réalisation, la solution aqueuse d'oxyde de graphène telle que décrite précédemment, est lyophilisée. Dans un mode de réalisation, la lyophilisation est effectuée à -37°C environ.

Selon un mode de réalisation, la solution aqueuse d'oxyde de graphène telle que décrite précédemment, est séchée après mélange. Selon un mode de réalisation, la solution aqueuse d'oxyde de graphène telle que décrite précédemment, est séchée pendant une durée de 1h à 72h, de préférence 1h à 48h, plus préférentiellement environ 48h. Selon un mode de réalisation, la solution aqueuse d'oxyde de graphène telle que décrite précédemment, est séchée pendant une durée d'environ 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47 ou 48h. Selon un mode de réalisation, le séchage est mis en oeuvre à l'air libre. Dans un mode de réalisation, le séchage est réalisé à l'air pendant 48 heures environ. Selon un mode de réalisation, le séchage est mis en oeuvre par le biais d'une étuve ou d'un four à vide. Selon un mode de réalisation, lorsque le séchage est mis en oeuvre par le biais d'une étuve ou d'un four à vide, la température de séchage est comprise de 30°C à 90°C; de préférence de 30°C à 80°C, de 30°C à 70°C, de 30°C à 60°C, de 30°C à 50°C, ou de 30°C à 40°C ; plus préférentiellement est d'environ 60°C. Selon un mode de réalisation, lorsque le séchage est mis en oeuvre par le biais d'une étuve ou d'un four à vide, la température de séchage est environ égale à 30, 35, 40, 45, 50, 55, 60, 65, 70, 75, 80, 85 ou 90°C. Dans un autre mode de réalisation, le séchage est réalisé dans un four à vide à 60°C environ, pendant 10 heures environ.

Selon un mode de réalisation, la formation du monolithe, la réduction de l'oxyde de graphène, et la formation et le dépôt de nanoparticules métalliques telles que des nanoparticules d'or dans ledit monolithe, sont réalisés en une seule étape.

Selon un mode de réalisation, l'étape (1) comprend en outre une étape d'élimination de l'eau résiduelle contenue dans le monolithe de l'invention, après réaction.

### Etape (2)

Selon un mode de réalisation, le procédé de l'invention comprend une étape de fonctionnalisation dudit monolithe obtenu à l'étape (1).

Selon un mode de réalisation, l'étape de fonctionnalisation comprend ou consiste à la formation et/ou au greffage de nanofils de silicium dans la structure du monolithe obtenu à l'issu de l'étape (1). Selon un mode de réalisation, le greffage des nanofils de silicium est obtenu par diffusion d'un gaz précurseur à la croissance des nanofils de silicium, de préférence un gaz silicié, plus préférentiellement du silane de formule SiH₄, au sein de la structure dudit monolithe obtenu à l'étape (1).

Selon un mode de réalisation, les nanofils de silicium sont interpénétrés dans la structure dudit monolithe. Selon un mode de réalisation, les nanofils de silicium sont greffés par un lien covalent sur la surface des pores dudit monolithe. Selon un mode de réalisation, les nanofils de silicium sont répartis de manière homogène sur l'ensemble de la surface des pores dudit monolithe.

Selon un mode de réalisation, la croissance des nanofils de silicium est obtenue en plaçant ledit monolithe dans un four adapté, notamment du type four LPCVD (« Low Pressure Chemical Vapor Deposition), à haute température en présence d'un mélange gazeux silicié.

Selon un mode de réalisation, les nanofils de silicium ne sont pas adsorbés à la surface du monolithe obtenu à l'étape (1).

Selon un mode de réalisation, l'invention concerne un procédé de fabrication d'un composite graphène / nanofils de silicium, qui est un monolithe poreux, dans lequel les nanofils de silicium sont distribués de façon homogène dans le monolithe et dans lequel les deux composants sont intimement liés. Dans une première étape, on prépare un composite graphène / nanoparticules d'or, qui est un monolithe poreux, dans lequel les nanoparticules d'or sont distribuées de façon homogène dans le monolithe et, dans une deuxième étape, on place ledit monolithe dans un four adapté, notamment du type four LPCVD, à haute température en présence d'un mélange gazeux silicié.

Selon un mode de réalisation, l'étape de fonctionnalisation du monolithe obtenu à l'issu de l'étape (1), est mise en oeuvre dans un four. Dans un mode de réalisation, on place le monolithe de graphène décoré de nanoparticules d'or dans un creuset en quartz que l'on place au centre du four.

Selon un mode de réalisation, l'étape de fonctionnalisation du monolithe obtenu à l'issu de l'étape (1), est mise en oeuvre à une température comprise de 400 à 1000 °C, de préférence de 500 à 800°C, plus préférentiellement d'environ 650°C. Selon un mode de réalisation, l'étape de fonctionnalisation du monolithe obtenu à l'issu de l'étape (1), est mise en oeuvre à une température comprise de 450 à 1000°C, de préférence de 450 à 900°C, de 450 à 850°C, de 450 à 800°C, de 450 à 750°C, de 450 à 700°C, de 450 à 650°C, de 450 à 600°C, de 450 à 550°C ou de 450 à 500°C.

Selon un mode de réalisation, l'étape de fonctionnalisation du monolithe obtenu à l'issu de l'étape (1), est mise en oeuvre en présence d'un gaz ou d'un mélange gazeux. Dans un mode de réalisation, le mélange gazeux comprend un gaz silicié, de préférence SiH₄, potentiellement un gaz additionnel, de préférence HCl, et un gaz porteur, de préférence H2.

Selon un mode de réalisation, le gaz silicié a un débit de 10 à 100 cm³/min, de préférence 40 cm³/min. Suivant un mode de réalisation, le gaz silicié a un débit de 10 à 90 cm³/min, de préférence de 20 à 90, de 30 à 90, de 40 à 90, de 50 à 90, de 60 à 90, de 70 à 90, ou de 80 à 90 cm³/min. Suivant un mode de réalisation, le gaz silicié a un débit d'environ 10, 15, 20, 25, 30, 35, 40, 45, 50, 55, 60, 65, 70, 75, 80, 85, 90, 95 ou 100 cm³/min.

Selon un mode de réalisation, le gaz additionnel a un débit de 50 à 500 cm³/min, de préférence 100 cm³/min. Selon un mode de réalisation, le gaz additionnel a un débit de 50 à 450 cm³/min; de préférence de 50 à 400, de 50 à 350, de 50 à 300, de 50 à 250, de 50 à 200, de 50 à 150, ou de 50 à 100 cm³/min. Selon un mode de réalisation, le gaz additionnel a un débit d'environ 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490 ou 500 cm³/min.

Dans ce mode de réalisation, l'utilisation d'un gaz additionnel permet d'obtenir des nanofils de silicium homogènes en tailles et en diamètres.

Suivant un mode de réalisation, le gaz porteur a un débit de 0,5 à 4 L/min, de préférence 1 L/min. Suivant un mode de réalisation, le gaz porteur a un débit d'environ 0,5 ; 1 ; 1,5 ; 2 ; 2,5 ; 3 ; 3,5 ou 4 L/min, Dans ce mode de réalisation, la présence du gaz porteur H₂ permet notamment d'obtenir du silicium réduit et non sous sa forme oxydée SiO₂.

Selon un mode de réalisation, l'étape de fonctionnalisation comprend en outre l'emploi d'un gaz dopant, de préférence choisi parmi phosphine ou diborane pour doper les nanofils n ou p, respectivement, et les rendre ainsi plus conducteurs. Dans un mode de réalisation, le dopage est intense et supérieur à 10¹⁹ cm⁻³ afin d'éliminer la résistance série du composant de stockage.

Suivant un mode de réalisation, la pression est de 500 à 1 400 Pa, préférentiellement 650 à 940, très préférentiellement 800 Pa environ.

Selon un mode de réalisation, la durée de réaction est de 15 à 60 min, de préférence 20 min environ. Selon un mode de réalisation, la durée de réaction est de 15 à 55 min, de 15 à 50 min, de 15 à 45 min, de 15 à 40 min, de 15 à 35 min, de 15 à 30 min, de 15 à 25 min, ou de 15 à 20 min. Il peut être intéressant de faire varier la durée de la réaction en fonction des applications, car elle permet de contrôler la longueur des nanofils de silicium dans le graphène.

### Avantages du procédé

Selon un mode de réalisation, le procédé de l'invention permet d'obtenir un monolithe à base de graphène ou d'oxyde de graphène tridimensionnel.

Selon un mode de réalisation, le procédé de l'invention permet d'obtenir un monolithe à base de graphène ou d'oxyde de graphène tridimensionnel présentant un haut degré de réduction avec un rapport C/O de 1 à 50, de préférence de 10 à 25, plus préférentiellement de 16,7. Selon un mode de réalisation, le rapport C/O du monolithe de l'invention est environ égal à 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 ou 50. Selon un mode de réalisation, le rapport C/O du monolithe de l'invention est de préférence de 1 à 50, de 1 à 40, de 1 à 30, de 1 à 20, ou de 1 à 10. Selon un mode de réalisation, le rapport C/O du monolithe de l'invention est de préférence de 5 à 50, de 10 à 50, de 15 à 50, de 20 à 50, de 25 à 50, de 30 à 50, de 35 à 50, de 40 à 50, ou de 45 à 50.

Selon un mode de réalisation, le procédé de l'invention permet d'obtenir un monolithe à base de graphène ou d'oxyde de graphène tridimensionnel présentant une structure poreuse et une surface spécifique élevée de 50 à 5000 m²/g, de préférence 800 à 2500 m²/g, très préférentiellement 1 433 m²/g. Selon un mode de réalisation, la surface spécifique du monolithe de l'invention est comprise de 50 à 5000 m²/g ; de préférence de 50 à 4000, de 50 à 3000, de 50 à 2000, de 50 à 1000, de 50 à 500, de 50 à 400, de 50 à 300, de 50 à 200, ou de 50 à 100 m²/g. Selon un mode de réalisation, la surface spécifique du monolithe de l'invention est comprise de 1000 à 2500 m²/g ; de préférence de 1100 à 2500, de 1200 à 2500, de 1300 à 2500, de 1400 à 2500, de 1500 à 2500, de 1600 à 2500, de 1700 à 2500, de 1800 à 2500, de 1900 à 2500, de 2000 à 2500, de 2100 à 2500, de 2200 à 2500, de 2300 à 2500, ou de 2400 à 2500 m²/g.

Selon un mode de réalisation, le procédé de l'invention permet d'obtenir un monolithe à base de graphène ou d'oxyde de graphène tridimensionnel présentant une faible résistance au transfert de charge. Selon un mode de réalisation, la résistance au transfert de charge est comprise de 0,1 à 5 Ω, de préférence 0,3 à 1,5 Ω, très préférentiellement 0,62 Ω. Selon un mode de réalisation, la résistance au transfert de charge est de préférence comprise de 0,1 à 4Ω, de 0,1 à 3Ω, de 0,1 à 2Ω, ou de 0,1 à 1Ω. Selon un mode de réalisation, la résistance au transfert de charge est d'environ 0,1 ; 0,2 ; 0,3 ; 0,4 ; 0,5 ; 0,6 ; 0,7 ; 0,8 ; 0,9 ou 1 Ω.

Selon un mode de réalisation, le procédé selon l'invention permet d'obtenir un graphène qui est tridimensionnel, qui présente un haut degré de réduction avec un rapport C/O de 1 à 50, de préférence de 10 à 25, plus préférentiellement de 16,7, qui présente une structure poreuse et une surface spécifique élevée de 50 à 5000, de préférence 800 à 2500, très préférentiellement 1 433 m²/g et qui présente une faible résistance au transfert de charge de 0,1 à 5 Ω, de préférence 0,3 à 1,5 Ω, très préférentiellement 0,62 Ω.

Selon un mode de réalisation, le procédé selon l'invention permet de produire un monolithe de graphène qui présente une porosité micro, méso et macro-métrique importante qui faciliteront la diffusion des gaz responsables de la croissance des nanofils de silicium au sein de la structure et donc l'interpénétration optimisée des nanofils de silicium et qui faciliteront l'établissement d'un lien physicochimique fort entre les nanofils de silicium et leur matrice de croissance.

Selon un mode de réalisation, la mesure de la surface spécifique est obtenue grâce à des études d'absorption de colorant au bleu de méthylène. Cette surface spécifique diffère de la surface BET non mesurée ici. Dans un mode de réalisation, les pores ont un diamètre de l'ordre du nanomètre à 500 micromètres. Les diamètres des pores ont été obtenus par microscopie électronique à balayage. La taille des pores observés par SEM est de 0,1 à 30 micromètres.

Le graphène selon l'invention présente l'avantage d'avoir une conductivité électrique élevée, de 10 à 2500 S/m, de préférence 950 à 1500 S/m, très préférentiellement de 1 141 S/m. Selon un mode de réalisation, la conductivité électrique du monolithe de l'invention est de préférence comprise de 100 à 2500 S/m, de 200 à 2500, de 300 à 2500, de 400 à 2500, de 500 à 2500, de 600 à 2500, de 700 à 2500, de 800 à 2500, de 900 à 2500, de 1000 à 2500, de 1100 à 2500, de 1200 à 2500, de 1300 à 2500, de 1400 à 2500, de 1500 à 2500, de 1600 à 2500, de 1700 à 2500, de 1800 à 2500, de 1900 à 2500, de 2000 à 2500, de 2100 à 2500, de 2200 à 2500, de 2300 à 2500, ou de 2400 à 2500 S/m. Selon un mode de réalisation, la conductivité électrique du monolithe de l'invention est d'environ 1 830 S/m.

Les valeurs de conductivité électrique ont été obtenues en utilisant une technique de mesure à quatre pointes. Des pastilles préparées en pressant un morceau de gel sous 10 MPa ont été utilisés pour ces mesures.

Le procédé selon l'invention permet de produire un composite graphène / nanoparticules d'or qui présente une porosité micro, méso et macroporosité importante qui faciliteront la distribution des nanoparticules d'or et la diffusion des gaz responsables de la croissance des nanofils de silicium au sein de la structure et donc l'interpénétration optimisée des nanofils de silicium et qui faciliteront l'établissement d'un lien physicochimique fort entre les nanofils de silicium et leur matrice de croissance. Par ailleurs, le procédé selon l'invention permet de produire un composite graphène / nanoparticules d'or qui présente une porosité macro et méso-métrique importante qui facilite le dépôt homogène des nanoparticules d'or catalysant la croissance des nanofils de silicium.

Ainsi, les procédés selon l'invention présentent l'avantage de produire des composites graphène / nanofils de silicium :
- pour lequel le composite est un monolithe tridimensionnel ;
- pour lequel le procédé de réduction de l'oxyde de graphène et la formation du monolithe est un procédé en une étape seulement ;
- pour lequel les 2 composants sont mélangés de façon homogène ;
- pour lequel les 2 composants sont intimement liés c'est-à-dire avec un lien physicochimique ;
- pour lequel le graphène est un monolithe poreux ;
- pour lequel le nanofil de silicium croit de façon à ne pas avoir de SiO₂ en surface ;
- pour lequel le procédé de croissance des nanofils produit simultanément une réduction supplémentaire du composite.

### Utilisations/Applications

La présente invention porte également sur l'utilisation du procédé ou du monolithe tel que décrit précédemment.

Selon un mode de réalisation, le monolithe de l'invention est utile pour la fabrication de matériau à haute conductivité électrique, de préférence adapté pour des applications de stockage de l'énergie comme des batteries lithium-ion ou des supercapacités.

La présente invention porte également sur une batterie comprenant le monolithe de l'invention. La présente invention porte également sur une supercapacité comprenant le monolithe de l'invention.

Selon un mode de réalisation, la supercapacité comprend deux tranches de monolithes de l'invention, de préférence de même masse et/ou dimensions. Selon un mode de réalisation, la supercapacité comprend en outre des mousses de nickel, du papier filtre, un électrolyte tel que par exemple une solution d'hydroxyde de potassium (KOH), et/ou au moins une électrode. Selon un mode de réalisation, la supercapacité de l'invention comprend comme électrolyte une solution d'hydroxyde de potassium (KOH) à une concentration de 6 mol/L. Selon un mode de réalisation, la supercapacité de l'invention a une structure de type Swagelok.

Selon un mode de réalisation, la supercapacité a une capacité de 1 à 500 F/g, de préférence de 100 à 300 F/g, plus préférentiellement environ égale à 190 F/g. Selon un mode de réalisation, la supercapacité a une capacité de 10 à 500 F/g ; de préférence de 50 à 500 F/g, de 100 à 500 F/g, de 150 à 500 F/g, de 200 à 500 F/g, de 250 à 500 F/g, de 300 à 500 F/g, de 350 à 500 F/g, de 400 à 500 F/g, ou de 450 à 500 F/g. Selon un mode de réalisation, la supercapacité a une capacité de 10 à 450 F/g ; de préférence de 10 à 400 F/g, de 10 à 350 F/g, de 10 à 300 F/g, de 10 à 200 F/g, ou de 10 à 100 F/g. Selon un mode de réalisation, la supercapacité a une capacité d'environ 100, 110, 120, 130, 140, 150, 160, 170, 180, 190, 200, 210, 220, 230, 240, 250, 260, 270, 280, 29 0 ou 300 F/g. Selon un mode de réalisation, la supercapacité a une capacité d'environ 190 F/g à une densité de courant de 0,5 A/g. Selon un mode de réalisation, la supercapacité a une capacité d'environ 123 F/g à une densité de courant de 100 A/g.

Selon un mode de réalisation, la supercapacité a une densité de puissance élevée. Selon un mode de réalisation, la supercapacité a une densité de puissance comprise de 1 à 100 kW/kg, de préférence de 10 à 50 kW/kg, plus préférentiellement d'environ 38 kW/kg.

Selon un mode de réalisation, la supercapacité a une densité de puissance comprise de 10 à 100 kW/kg, de 20 à 100 kW/kg, de 30 à 100 kW/kg, de 40 à 100 kW/kg, de 50 à 100 kW/kg, de 60 à 100 kW/kg, de 70 à 100 kW/kg, de 80 à 100 kW/kg, ou de 90 à 100 kW/kg. Selon un mode de réalisation, la supercapacité a une densité de puissance comprise de 10 à 90 kW/kg, de 10 à 80 kW/kg, de 10 à 70 kW/kg, de 10 à 60 kW/kg, de 10 à 50 kW/kg, de 10 à 40 kW/kg, de 10 à 30 kW/kg, ou de 10 à 20 kW/kg. Selon un mode de réalisation, la supercapacité a une densité de puissance d'environ 10, 15, 20, 25, 30, 35, 40, 45, 50, 55, 60, 65, 70, 75, 80, 85, 90, 95 ou 100 kW/kg.

Selon un mode de réalisation, la supercapacité fournit une densité d'énergie comprise de 1 à 100 Wh/kg, de préférence de 10 à 50 Wh/kg, plus préférentiellement d'environ 4,3 Wh/kg. Selon un mode de réalisation, la supercapacité fournit une densité d'énergie comprise de 10 à 100 Wh/kg, de préférence de 10 à 90 Wh/kg, de 10 à 80 Wh/kg, de 10 à 70 Wh/kg, de 10 à 60 Wh/kg, de 10 à 50 Wh/kg, de 10 à 40 Wh/kg, de 10 à 30 Wh/kg, ou de 10 à 20 Wh/kg. Selon un mode de réalisation, la supercapacité fournit une densité d'énergie comprise de 20 à 100 Wh/kg, de 30 à 90 Wh/kg, de 40 à 100 Wh/kg, de 50 à 100 Wh/kg, de 60 à 100 Wh/kg, de 70 à 100 Wh/kg, de 80 à 100 Wh/kg, ou de 90 à 100 Wh/kg.

Selon un mode de réalisation, la supercapacité a une densité de puissance comprise de 1 à 100 kW/kg tout en fournissant une densité d'énergie de 1 à 100 Wh/kg. Selon un mode de réalisation, la supercapacité a une densité de puissance d'environ 38 kW/kg tout en fournissant une densité d'énergie de 4,3 Wh/kg.

Selon un mode de réalisation, la supercapacité ou la batterie de l'invention a une capacité de décharge gravimétrique comprise de 1 à 300 F/g, de préférence de 10 à 150 F/g, plus préférentiellement d'environ 130 F/g. Selon un mode de réalisation, la supercapacité ou la batterie de l'invention a une capacité de décharge gravimétrique d'environ 10, 20, 30, 40, 50, 60, 70, 80, 90, 100, 110, 120, 130, 140, 150, 160, 170, 180, 190, 200, 210, 220, 230, 240, 250, 260, 270, 280, 290 ou 300 F/g.

Selon un mode de réalisation, la supercapacité ou la batterie de l'invention a une capacité de décharge volumétrique comprise de 1 à 500 F/cm³, de préférence de 100 à 500 F/cm³, plus préférentiellement d'environ 200 F/cm³. Selon un mode de réalisation, la supercapacité ou la batterie de l'invention a une capacité de décharge volumétrique d'environ 1, 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490 ou 500 F/cm³. Selon un mode de réalisation, la supercapacité ou la batterie de l'invention a une capacité de décharge volumétrique comprise de 1 à 500 F/cm³, de préférence de 100 à 500 F/cm³, plus préférentiellement d'environ 200 F/cm³, à une densité de courant de 2A/g.

Selon un mode de réalisation, la supercapacité ou la batterie de l'invention présente une excellente conductivité électrique. Selon un mode de réalisation, la supercapacité ou la batterie de l'invention peut transférer rapidement les charges à l'interface électrode/électrolyte. Selon un mode de réalisation, la supercapacité ou la batterie de l'invention permet une diffusion ionique des électrodes plus rapide.

Selon un mode de réalisation, la supercapacité ou la batterie de l'invention présente une excellente stabilité cyclique. Selon un mode de réalisation, la supercapacité ou la batterie de l'invention a une rétention de capacité de plus de 10%, de préférence de 10% à 100%, plus préférentiellement de 50% à 95%. Selon un mode de réalisation, la supercapacité ou la batterie de l'invention a une rétention de capacité de 60% à 100%, de préférence de 80% à 99%, plus préférentiellement de 90% à 99%. Selon un mode de réalisation, la supercapacité ou la batterie de l'invention a une rétention de capacité d'environ 5, 10, 15, 20, 25, 30, 35, 40, 45, 50, 55, 60, 65, 70, 75, 80, 85, 90, 95 ou 100%. Selon un mode de réalisation, la supercapacité ou la batterie de l'invention a une rétention de capacité d'environ 93%. Selon un mode de réalisation, la supercapacité ou la batterie de l'invention a une rétention de capacité d'environ 93% après 2 000 cycles. Selon un mode de réalisation, la supercapacité ou la batterie de l'invention a une rétention de capacité d'environ 93% après 2 000 cycles à une densité de courant de 10 A/g.

Selon un mode de réalisation, la supercapacité ou la batterie de l'invention a une rétention de capacité de 100% après 5 000 cycles. Selon un mode de réalisation, la supercapacité ou la batterie de l'invention a une rétention de capacité de 100% après 5 000 cycles à une densité de courant de 2 A/g.

Selon un mode de réalisation, la conductivité électrique de la supercapacité ou de la batterie de l'invention est de préférence comprise de 100 à 2500 S/m, de 200 à 2500, de 300 à 2500, de 400 à 2500, de 500 à 2500, de 600 à 2500, de 700 à 2500, de 800 à 2500, de 900 à 2500, de 1000 à 2500, de 1100 à 2500, de 1200 à 2500, de 1300 à 2500, de 1400 à 2500, de 1500 à 2500, de 1600 à 2500, de 1700 à 2500, de 1800 à 2500, de 1900 à 2500, de 2000 à 2500, de 2100 à 2500, de 2200 à 2500, de 2300 à 2500, ou de 2400 à 2500 S/m. Selon un mode de réalisation, la conductivité électrique de la supercapacité ou de la batterie de l'invention est d'environ 1 830 S/m.

Selon un mode de réalisation, la supercapacité ou la batterie de l'invention a une densité de courant de plus de 0 à 10 A/g, de préférence de 1 à 5 A/g, plus préférentiellement d'environ 2 A/g. Selon un mode de réalisation, la supercapacité ou la batterie de l'invention a une densité de courant d'environ 1, 2, 3, 4, 5, 6, 7, 8, 9 ou 10 A/g. Selon un mode de réalisation, la supercapacité ou la batterie de l'invention a une densité de courant de 1 à 10 A/g, de préférence de 1 à 9 A/g, de 1 à 8 A/g, de 1 à 7 A/g, de 1 à 6 A/g, de 1 à 5 A/g, de 1 à 4 A/g, de 1 à 3 A/g, ou de 1 à 2 A/g.

### BRÈVE DESCRIPTION DES FIGURES

**Figure 1** est une photographie montrant le schéma du processus de formation de gels avec différentes diamines utilisées comme réducteur.
**Figure 2** est un tableau montrant la composition élémentaire et le rapport C / O de GH-HD obtenus à partir de la spectroscopie photo-électronique à rayons X, la conductivité électrique (σ) de GH-HD et les capacités de décharge de GH-HD (C_{wt}) en F/g à différents taux.
**Figure 3** est un ensemble de 2 images (a et b) de microscopie électronique à balayage des structures 3D de GH-HD.
**Figure 4** est un graphique montrant une comparaison des densités d'énergie et de puissance de GH-HD et de GH-ED avec des références de la littérature où les matériaux à base de graphène sont obtenus par diverses techniques de réduction.
**Figure 5** est un graphique montrant une étude de stabilité cyclique de GH-HD montrant des capacités de décharge après 5 000 cycles lorsqu'elles sont effectuées à une densité de courant de 2 A/g.
**Figure 6** est un graphique montrant la capacité spécifique (exprimée en F/cm³) de GH-HD et de CMG, en fonction de la densité de courant (exprimée en A/g).
**Figure 7** est un graphique montrant la stabilité cyclique de GH-HD et de son composé densifié GH-HD-AD obtenu à une densité de courant de 2 A/g, sur 5000 cycles.

### EXEMPLES

La présente invention se comprendra mieux à la lecture des exemples suivants qui illustrent non-limitativement les procédés de l'invention.

### Exemple 1 : Préparation du monolithe de graphène décoré de nanoparticules d'or avec comme réducteur l'hydrate d'hydrazine

Une solution aqueuse d'oxyde de graphène (GO) est préparée dans une gamme de 2.5 à 10 mg/mL, généralement 5 mg/mL. On y ajoute une masse d'HAuCl₄ de laquelle dépendra le taux de chargement en nanoparticules d'or du système final. Par exemple 3 ou 30 mg. On ajoute de l'hydrate d'hydrazine entre 3.6 µL/mg de GO et 7.2 µL/mg de GO (à des concentrations plus faibles le monolithe ne se forme pas). La solution est soniquée pendant 10 min environ. Le flacon est fermé, placé dans un bain d'huile et chauffé, sans agitation, à 80°C environ pendant 24 heures environ. On obtient un bloc de graphène, qui est ensuite lavé par immersions successives dans de l'eau distillée, puis lyophilisé à -37°C environ, puis séché à l'air pendant 48 heures environ, puis chauffé à nouveau dans un four à vide à 60°C environ, pendant une nuit environ. La formation du monolithe, la réduction de l'oxyde de graphène, et le dépôt de particules d'or sont réalisés, de manière concomitante, dans un processus en une étape.

Il est à noter que dans des conditions de concentration de GO inférieure à 2.5 mg/mL et d'hydrate d'hydrazine inférieure à 3.6 µL/mg de GO aucun monolithe n'est formé et le mélange reste sous forme de dispersion après réaction.

Après la réaction, le liquide est éliminé, et le bloc de graphène est immergé dans l'eau pendant 30 min environ afin de dissoudre l'hydrate d'hydrazine n'ayant pas réagi. Cette immersion est répétée au moins 3 fois. Le bloc est ensuite lyophilisé puis séché dans une étuve à vide. Sous sa forme sèche, le bloc peut être cassé et coupé en morceaux.

### Exemple 2 : Préparation du monolithe de graphène décoré de nanoparticules d'or avec comme réducteur l'éthylène diamine

Les mêmes conditions opératoires que celles décrites ci-dessus sont utilisées. Seule la quantité d'éthylène diamine varie entre 5 µL/mg de GO et 10 µL/mg de GO.

### Exemple 3 : Préparation du monolithe de graphène décoré de nanoparticules d'or avec comme réducteur le 1,4-diamine butane

Les mêmes conditions opératoires que celles décrites ci-dessus sont utilisées. Seule la quantité de 1,4-diamine butane varie entre 5 µL/mg de GO et 20 µL/mg de GO.

### Exemple 4 : Préparation du monolithe de graphène, sans or, avec comme réducteurs l'hydrate d'hydrazine, l'éthylène diamine ou le 1,4-diamine butane

Les mêmes conditions opératoires que celles décrites ci-dessus sont utilisées, sans HAuCl₄. Après la phase de lyophilisation, on obtient des hydrogels : GH-HD avec l'hydrate d'hydrazine, GH-ED avec l'éthylène diamine et GH-DB avec le 1, 4-diamine butane.

Un hydrogel dense GH-HD-AD est obtenu après séchage à l'air de GH-HD.

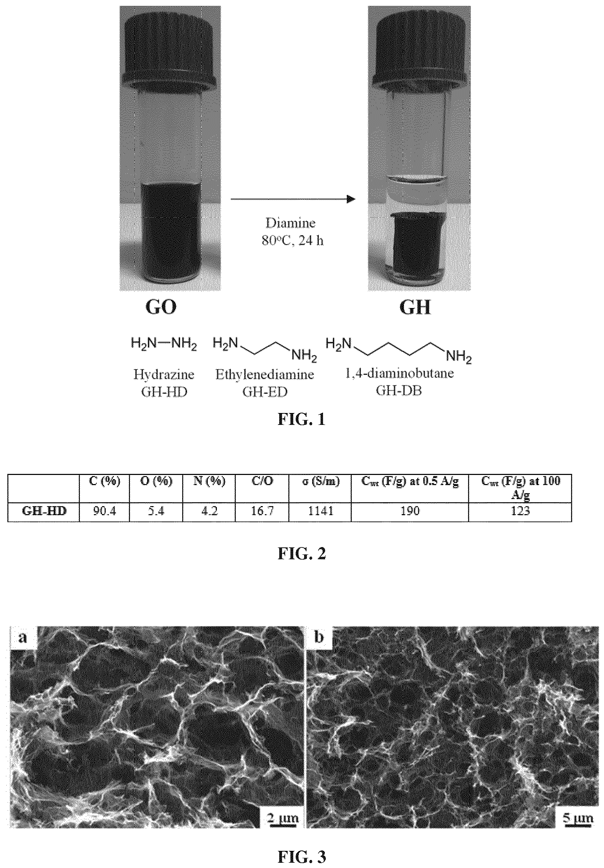

La figure 1 présente le schéma du processus de formation de gels avec différentes diamines utilisées comme réducteur.

Les caractéristiques techniques de GH-HD et de GH-HD-AD sont présentées ci-dessous dans la partie résultats.

### Exemple 5 : Croissance des nanofils de silicium

On place un morceau du monolithe de graphène décoré de nanoparticules d'or tel qu'obtenu dans les exemples 1, 2 ou 3 dans un creuset en quartz que l'on place au centre d'un four LPCVD. On réalise la croissance à une température avoisinant les 650°C avec un gaz réactif SiH₄ (débit 40 cm³/min environ), un gaz additionnel HCl (débit à 100 cm³/min environ) et un gaz porteur H₂ (débit à 1L/min environ). La pression totale de travail est de 6 Torr environ. La durée de réaction est de 20 min environ. Ce dernier critère n'a d'importance que sur la longueur des nanofils de silicium.

### Exemple 6 : Fabrication de supercapacités

Les monolithes de graphène GH-HD tels qu'obtenus dans l'exemple 4 sont découpés en plusieurs tranches de 1 mm d'épaisseur environ. Deux tranches du monolithe, de même masse, sont pressées sur des mousses de nickel sous une pression de 10 MPa. Un morceau de papier filtre (papier filtre Whatman) a été utilisé comme séparateur entre les électrodes. Les électrodes et le papier filtre, trempés toute une nuit dans 6 M d'électrolyte KOH, ont été assemblés dans une structure en couches dans une configuration de cellules à deux électrodes de type Swagelok avec de l'acier inoxydable en tant que collecteur de courant.

Les caractéristiques techniques de la supercapacité obtenue sont présentées ci-dessous dans la partie résultats.

### Matériel et Méthodes

### Mesures électrochimiques

La performance de la supercapacité de l'exemple 6 a été évaluée en utilisant la voltamétrie cyclique, les cycles charge-décharge galvanostatique et la spectroscopie d'impédance électrochimique.

Un potentiostat / galvanostat multi-canaux VMP3 équipé du logiciel EC-Lab (Biologie) a été utilisé pour toutes les techniques électrochimiques.

Les mesures de voltamétrie cyclique et de charge-décharge ont été effectuées entre 0 et 1 V avec des vitesses de balayage de 100 mV/s à 1 000 mV/s et 0,5 A/g à 100 A/g respectivement.

Le test de spectroscopie d'impédance électrochimique a été effectué dans une gamme de fréquences comprise entre 400 kHz et 40 mHz et une perturbation CA de 10 mV.

Les capacitances gravimétriques (C_{wt}) des monolithes de graphène dérivés des courbes de décharges galvanostatiques ont été calculées en utilisant l'équation : C_{wt} = 2 I/m(ΔV/Δt)), où I est le courant de décharge constant, m est la masse d'une électrode et ΔV et Δt représentent le changement de tension (à l'exception de V_{drop}) sur la décharge et le temps de décharge complète, respectivement.

Les capacités volumétriques correspondantes (Cᵥₒₗ) ont été calculées comme suit : Cᵥₒₗ = C_{wt} x ρ, où ρ est la densité de conditionnement du graphène.

L'énergie gravimétrique(E_{wt}) et les densités de puissance (P) ont été calculées comme E_{wt} = C_{wt}V2 / 8 et P = E_{wt} / Δt.

Les densités de conditionnement ont été obtenues en calculant la masse de gel séché avec une précision de 0,01 mg et en mesurant les dimensions en utilisant une microscopie électronique à balayage.

### Caractérisations techniques

Une balance de pesage Metler-Toledo XPE205 a été utilisée pour obtenir le poids des échantillons avec une précision de 0,01 mg.

Les modifications de la liaison chimique ont été analysées par spectroscopie infrarouge par transformée de Fourier (FT-IR, Thermofischer ES 50) dans la gamme de fréquences de 4 000 à 400 cm⁻¹.

Les matériaux ont été testés en pastille KBr.

Les structures cristallographiques des matériaux ont été déterminées par un système de diffraction à rayons X grand angle (XRD) sur un diffractomètre à rayons X Panalytical X'pert PRO à l'aide d'une source de rayonnement Co Kα (λ = 1,79 Å).

L'analyse thermogravimétrique (TGA) de tous les échantillons a été effectuée avec un équipement Setaram TGA 92 avec une rampe de chauffage de 5°C/min sur une gamme de température comprise entre 30°C et 800°C sous atmosphère d'azote.

Les valeurs de conductivité électrique ont été obtenues en utilisant une technique de mesure à quatre pointes. Des pastilles préparées en pressant un morceau de gel sous 10 MPa ont été utilisées pour ces mesures.

Les densités de conditionnement ont également été calculées en mesurant la masse et le volume de ces films.

Des analyses de spectroscopie photo-électronique par rayons X (XPS) ont été réalisées à l'aide d'un spectromètre PHI Versa Probe II avec une source de rayons X Al Kα monochromatisée (1 486,6 eV) focalisée sur une tâche de 100 µm et avec un angle de décollage électronique de Θ = 45°.

Les spectres globaux des photoélectrons ont été enregistrés avec une énergie de passage de 117 eV et les spectres haute résolution avec une énergie de passage de 23,5 eV. La déconvolution des spectres de niveau C1s et N1s a été effectuée en ajustant les composants individuels aux valeurs obtenues à partir de rapports antérieurs en utilisant le logiciel Casa XPS. Les spectres ont été ajustés dans des courbes Gauss-Lorentz avec des valeurs maximales de largeur totale inférieure à 1,5 dans tous les cas.

La morphologie des monolithes de graphène a été caractérisée en utilisant un microscope électronique Zeiss Ultra 55 à une tension d'accélération de 7 kV.

### Résultats

### GH-HD

Les propriétés physiques et chimiques des monolithes de graphène GH-HD de l'exemple 4 ont été caractérisées par des mesures FT-IR, TGA, XRD, XPS et de conductivité. Une microscopie électronique à balayage a été effectuée pour analyser les structures tridimensionnelles.

L'analyse des échantillons de GH-HD synthétisés avec les conditions de réaction optimisées de l'exemple 4 a révélé que les hydrogels obtenus sont exceptionnellement conducteurs avec d'excellentes capacités de puissance. En outre, au lieu d'utiliser d'importantes quantités de monohydrate d'hydrazine comme le décrit la littérature, on utilise simplement un équivalent molaire de réducteur correspondant à la quantité d'oxyde de graphène utilisé.

L'hydrazine, qui est un agent réducteur fort, favorise la formation du monolithe via l'assemblage d'oxyde de graphène réduit par des interactions non covalentes telles que les interactions π-π. Le GH-HD synthétisé présente donc un haut degré de réduction avec un rapport C/O important de 16,7 (cf. Figure 2), un espacement inter-couches de 3,76 Å et un comportement thermique identique au graphite.

GH-HD présente une morphologie poreuse (cf. Figure 3) et présente une surface spécifique élevée de 1 433 m²/g.

Le réseau macroporeux permet également une conductivité élevée du GH-HD de 1 141 S/m (cf. Figure 2).

Le GH-HD synthétisé présente enfin une faible résistance au transfert de charge de 0,62 Ω offrant de réelles performances à haut débit.

Le processus de synthèse selon l'invention est très simple, en une étape, et permet d'obtenir ces monolithes de graphène très réduits qui sont susceptibles d'être utilisés dans des batteries lithium ion et des supercapacités faibles coûts ayant des puissances élevées.

### Supercapacité

Le GH-HD synthétisé a été testé dans une configuration de supercapacité selon l'exemple 6.

Le transfert de charge et les transferts d'ions au sein du GH-HD hautement conducteur et poreux se sont révélés être à l'origine des bonnes performances électrochimiques de la supercapacité.

Le GH-HD synthétisé, en configuration de supercapacité, démontre des capacités élevées de 190 F/g à une densité de courant de 0,5 A/g et de 123 F/g à une densité de courant de 100 A/g (cf. Figure 2).

Ces performances sont attribuées, d'une part, aux réseaux tridimensionnels avec des volumes de pores importants qui facilitent le transfert rapide d'ions sur l'interface des électrodes, d'autre part, à l'excellente conductivité électrique de GH-HD qui permet un transfert rapide de charge à l'interface électrode / électrolyte.

Ces résultats corroborent l'impact positif de la conductivité électrique et de la porosité de GH-HD sur le transfert de charge et la diffusion ionique des électrodes.

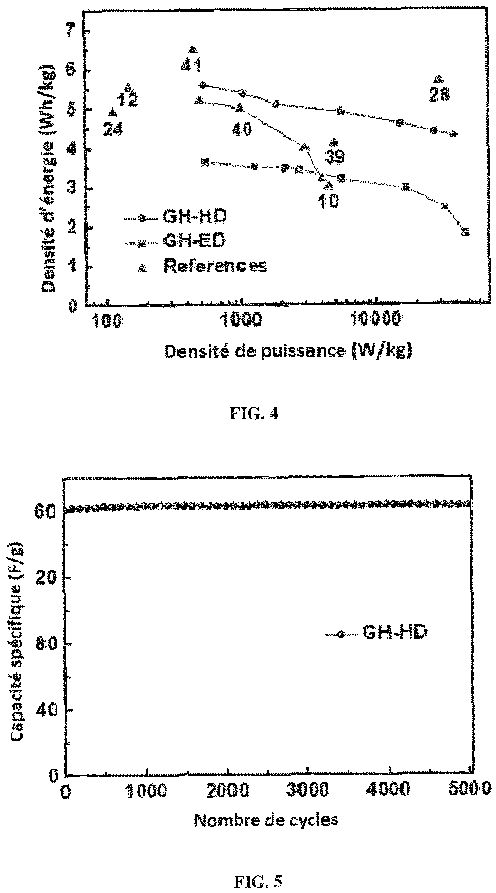

Lorsqu'il est recyclé à une densité de courant élevée de 100 A/g, avec un temps de décharge secondaire de 0,4 s, GH-HD en configuration de supercapacité offre une densité de puissance élevée de 38 kW/kg tout en fournissant une densité d'énergie de 4.3 Wh/kg (cf. Figure 4). GH-HD dépasse ainsi les monolithes de graphène obtenus par réduction de l'oxyde de graphène par traitement hydrothermal, traitement thermique et L-glutathion.

Enfin, GH-HD en configuration de supercapacité présente une excellente stabilité cyclique avec une rétention de capacité de 93% observée après 2 000 cycles à une densité de courant élevée de 10 A/g. Une rétention de capacité complète a été observée après 5 000 cycles à une densité de courant de 2 A/g (cf. Figure 5).

### L'oxyde de graphène réduit à l'hydrazine gazeuse (CMG)

CMG a été synthétisé dans des conditions de réaction similaires à celles de GH-HD de l'exemple 4 avec agitation continue (procédures en ESI).

CMG présente une conductivité électrique de 1 832 S/m, supérieure à celle de GH-HD (1 141 S/m) ; cela peut être compris par l'amélioration de la réduction dans des milieux réactionnels homogénéisés.

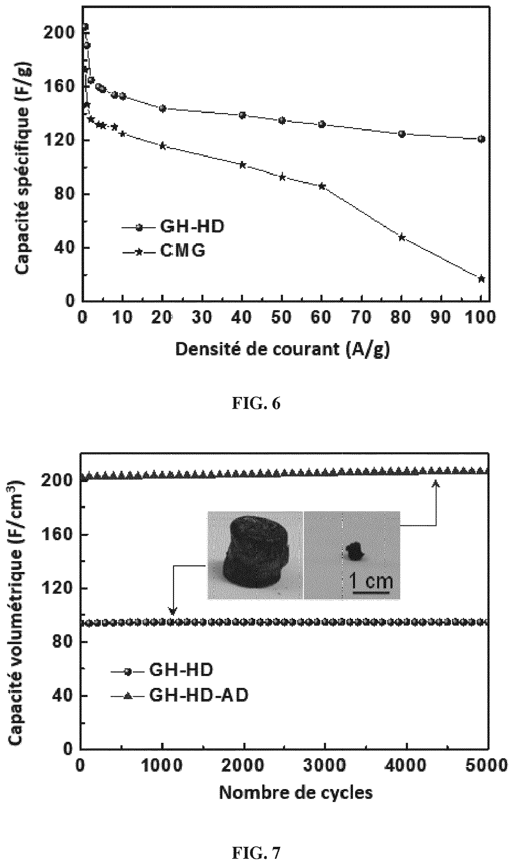

La Figure 6 montre la capacité spécifique de GH-HD et de CMG, en fonction de la densité de courant.

### Gel GH-HD densifié (GH-HD-AD)

Enfin, compte tenu de l'importance des bonnes capacitances volumétriques pour les applications de supercapacités compactes, nous avons synthétisé un gel GH-HD dense en suivant une simple procédure de séchage.

Après la synthèse de gel avec de l'hydrazine, le GH-HD a été densifié pour passer d'une densité de 0,58 g/cm³ à 1,56 g/cm³ en le séchant dans des conditions ambiantes. L'élimination progressive des molécules d'eau des espaces inter-couches réduit le gel à près d'un dixième de sa taille d'origine.

La Figure 7 montre la stabilité cyclique de GH-HD et de son homologue densifié GH-HD-AD à une densité de courant de 2 A/g. GH-HD-AD fournit des capacités de décharge gravimétrique et volumétrique de 130 F/g et 200 F/cm3 respectivement à une densité de courant élevée de 2 A/g.

Bien que les capacités gravimétriques soient classiquement utilisées comme critère d'évaluation des supercapacités, la capacité volumétrique est considérée comme une mesure cruciale pour les applications portables compactes. Par une simple technique de séchage, il est possible de doubler la capacité volumétrique du GH-HD lyophilisé de 110 F/cm³ à 257 F/cm³ à une densité de courant de 0,5 A/g.

## Revendications

1. Procédé de fabrication d'un matériau tridimensionnel comprenant un monolithe d'oxyde de graphène réduit chimiquement dans lequel sont dispersés des nanofils de silicium et des nanoparticules d'or, ledit procédé étant **caractérisé en ce qu'**il comprend :
- une étape (1) de préparation d'un monolithe d'oxyde de graphène réduit chimiquement dans lequel sont dispersés des nanoparticules d'or ; et
- une étape (2) de fonctionnalisation dudit monolithe obtenu à l'étape (1), dans laquelle du silicium, de préférence sous forme de nanofils, est greffé à la surface dudit monolithe, et pour laquelle ledit monolithe est porté à une température de 500 à 850°C, de préférence 600 à 800°C, très préférentiellement environ 650°C en présence d'un gaz silicié.

2. Procédé selon la revendication **1, caractérisé en ce que** l'on prépare le monolithe d'oxyde de graphène réduit chimiquement dans lequel sont dispersées des nanoparticules d'or (étape 1), par la mise en contact dans une solution aqueuse d'oxyde de graphène, d'HAuCl₄ et d'un réducteur choisi parmi l'hydrate d'hydrazine, l'éthylène diamine et le 1,4-diaminebutane, lors d'une réaction en une étape.

3. Procédé selon la revendication **1** ou la revendication **2, caractérisé en ce que** la fonctionnalisation du monolithe d'oxyde de graphène réduit chimiquement dans lequel sont dispersées des nanoparticules d'or (étape 2) est réalisée par chauffage dudit monolithe dans un four LPCVD en présence : d'un gaz réactif silicié, de préférence, SiR₄; d'un gaz additionnel, de préférence un gaz acide, plus préférentiellement HCl ; et d'un gaz porteur, de préférence l'hydrogène H₂ ; à haute pression, de préférence 500 à 1 400 Pa, plus préférentiellement 650 à 940 Pa, plus préférentiellement 800 Pa environ.

4. Procédé de préparation d'un monolithe d'oxyde de graphène réduit chimiquement, par la mise en contact d'une solution aqueuse d'oxyde de graphène et d'un réducteur choisi parmi l'hydrate d'hydrazine, l'éthylène diamine et le 1,4-diaminebutane, lors d'une réaction en une étape.

5. Monolithe d'oxyde de graphène réduit chimiquement, susceptible d'être obtenu par le procédé selon l'une quelconque des revendications **1** à **4.**

6. Monolithe d'oxyde de graphène réduit chimiquement selon la revendication 5, **caractérisé en ce que** :
- il présente un haut degré de réduction avec un rapport C/O de 1 à 50, de préférence 10 à 25, plus préférentiellement environ 16,7 ;
- il est poreux avec une surface spécifique de 50 à 5 000 m²/g, de préférence 800 à 2500, très préférentiellement environ 1 433 m²/g ; et
- il présente une faible résistance au transfert de charge de 0,1 à 5 Ω, de préférence 0,3 à 1,5 Ω, très préférentiellement environ 0,62 Ω.

7. Monolithe selon la revendication **5** ou la revendication **6,** dans lequel les pores ont un diamètre de 1 nanomètre environ à 500 micromètres.

8. Monolithe selon l'une quelconque des revendications **5** à **7,** dont la conductivité électrique est de 10 à 2500, de préférence 950 à 1500, très préférentiellement de 1141 S/m.

9. Monolithe selon l'une quelconque des revendications **5** à **8,** dont la capacité de décharge gravimétrique est comprise de 1 à 300 F/g, de préférence de 10 à 150 F/g, plus préférentiellement d'environ 130 F/g.

10. Batterie lithium-ion comprenant un monolithe selon l'une quelconque des revendications **5** à **9.**

11. Supercapacité comprenant un monolithe selon l'une quelconque des revendications **5** à **9.**

12. Batterie lithium-ion selon la revendication **10** ou supercapacité selon la revendication **11,** dont la rétention de capacité est comprise de 80% à 99%, de préférence de 90% à 99%.

13. Batterie lithium-ion selon la revendication **10** ou supercapacité selon la revendication **11,** dont la capacité de décharge volumétrique est comprise de 100 à 500 F/cm³, de préférence est d'environ 200 F/cm³.

14. Batterie lithium-ion selon la revendication **10** ou supercapacité selon la revendication **11,** dont la densité de puissance est comprise de 1 à 100 kW/kg, de préférence de 10 à 50 kW/kg, plus préférentiellement d'environ 38 kW/kg.
